# FASCICULE DE BREVET EUROPEEN

(11) **EP 3 425 118 B1**
(45) Date de publication et mention de la délivrance du brevet: **11.12.2019**
(21) Numéro de dépôt: 18182065.5
(22) Date de dépôt: 05.07.2018
(51) Int. Cl.: E02B 9/00

(54) **PROCÉDÉ ET DISPOSITIF DE PRODUCTION D'ÉLECTRICITÉ À PARTIR D'UN FLUX D'EFFLUENTS**
VERFAHREN UND VORRICHTUNG ZUR ERZEUGUNG VON ELEKTRIZITÄT AUS EINEM ABGASSTROM
METHOD AND DEVICE FOR PRODUCING ELECTRICITY FROM AN EFFLUENT STREAM

(30) Priorité: 05.07.2017 FR 1770714
(43) Date de publication de la demande: 09.01.2019
(73) Titulaire: Caffa Martino Energy, 75011 Paris (FR)
(72) Inventeur: MARTINO, ALVARO, 20290 BORGO (FR)
(74) Mandataire: Nicolle, Olivier

(56) Documents cités:
- US-A1- 2012 153 623
- US-B1- 6 420 794

## Description

La présente invention concerne la production d'énergie hydroélectrique pour l'alimentation électrique de système de traitement d'effluents.

L'augmentation constante de la quantité d'effluents produite ces dernières années nécessite des installations de traitement de plus en plus efficaces. Ainsi, la demande énergétique de ces systèmes de traitement ne cesse d'augmenter, et les sources énergétiques utilisées afin de satisfaire cette demande impliquent souvent un impact sur l'environnement tel que le nucléaire ou les sources d'énergies fossiles. Les autres sources d'énergie ayant un impact plus faible, tel que les sources hydroélectriques, éolienne, ou autre, nécessitent quant à elles des conditions environnementales particulières pour fonctionner, ainsi qu'une mise en place souvent contraignante. La source d'énergie la plus simple d'accès pour ces systèmes de traitement serait l'énergie hydroélectrique laquelle pourrait être obtenue par transformation du flux d'effluents que ces systèmes ont à traiter en énergie électrique.

Les systèmes déjà inclus dans la technique afin d'effectuer cette transformation emploient principalement des dispositifs utilisant une circulation d'effluents redirigé partiellement comme source d'énergie initiale en tous points d'un réseau de circulation d'effluents non traités tel que le système décrit par le brevet US2012153623A1. Le document US6420794B1 décrit un dispositif selon le préambule de la revendication 1.

Les inconvénients des systèmes actuels sont multiples. En effet, ils nécessitent la mise en place de grandes infrastructures afin de rediriger un flux suffisant pour la transformation énergétique, et sont difficiles à mettre en œuvre, limitant leur mise en place à des structures importantes et bien desservies technologiquement et énergétiquement, tel que les milieux urbains ou péri-urbains. Ces systèmes de production d'énergie hydroélectrique, bien que générateurs d'énergie, ont besoin d'une ou plusieurs sources d'alimentation externes pour fonctionner. De plus, le besoin d'entretien de ces systèmes de production d'énergie est grand, principalement due à des fluides circulants non traités comportant de nombreux composants solides, et donc de viscosité moyenne plus grande que celle de l'eau, ce qui de surcroît, réduit le rendement de production d'énergie hydroélectrique et peut endommager les dispositifs mis en place. D'autre part, les systèmes actuels présentent l'inconvénient de ne pouvoir permettre un contrôle précis du débit et de la pression auxquels sont soumis les fluides dans les dispositifs de génération d'énergie, et par conséquent ne permettent pas un contrôle précis de la production d'énergie elle-même. Enfin, les systèmes actuels mettent en place une co-dépendance énergétique partielle entre des systèmes de consommation d'énergie externes et les systèmes de production d'énergie électrique, ce qui oblige les systèmes actuels à avoir de multiples sources d'énergie.

La présente invention remédie à ces inconvénients.

Elle porte sur un dispositif de production d'énergie hydroélectrique à partir d'un flux d'effluents.

Selon une définition générale de l'invention le dispositif de production d'énergie hydroélectrique comprend :
- un circuit principal en boucle ouverte comprenant une canalisation principale dans laquelle circule des fluides destinés en sortie à être éjectés sur un groupe turbine/alternateur générateur d'électricité, une première entrée de la canalisation principale recevant le flux d'effluents pour siphonner ensuite des fluides destinés à circuler dans le circuit principal ;
- au moins une boucle de rétroaction comprenant un gicleur à diamètre variable dont l'entrée est reliée à une seconde entrée de la canalisation principale, un éjecteur et un col de venturi configuré pour aspirer les effluents en sortie de l'éjecteur, la boucle de rétroaction comprenant en outre un piquage en sortie du col de venturi pour alimenter un surpresseur à fréquence variable afin d'établir une pression dynamique des fluides circulants, ledit surpresseur étant suivi d'un réservoir dont la sortie est reliée à l'entrée du gicleur afin de maintenir une pression statique choisie des fluides circulants en mode de fonctionnement permanent à l'intérieur de la canalisation principale; et
- une unité de pilotage configurée pour établir une circulation des fluides en mode de fonctionnement permanent dans la canalisation principale, faire varier la fréquence de l'alimentation du surpresseur de manière à augmenter/baisser le débit et la pression dynamique des fluides en circulation, piloter la marche/ arrêt du dispositif de production d'énergie hydroélectrique et contrôler le fonctionnement du groupe turbine/alternateur afin de produire une quantité contrôlée d'électricité.

Ainsi, le dispositif de production d'énergie hydroélectrique conforme à l'invention est autonome, compact, amovible et adaptable à un système de traitement des effluents, facilement déplaçable pour une mise en place dans des zones diverses, urbaines, péri-urbaines et reculées, et ne nécessite pas d'apport énergétique externe pour fonctionner. De plus, le dispositif conforme à l'invention génère lui-même via un système de pompage et de surpression par boucle(s) de rétroaction, un flux circulant contrôlé et modulable en terme de pression et de débit à partir d'effluents traités ou partiellement traités de viscosité proche de l'eau, lesquels sont soumis à une étape de piquage de la zone de traitement vers le système, ce qui permet à la fois de limiter le besoin d'entretien du dispositif, tout en assurant une génération d'énergie hydroélectrique optimale et contrôlée. Enfin, le dispositif conforme à l'invention permet de rendre énergétiquement autonome le système de traitement des effluents auquel il est adapté.

Suivant certains modes de mise en œuvre, le dispositif conforme à l'invention comprend en outre une ou plusieurs caractéristiques suivantes, prise(s) isolément ou suivant toutes les combinaisons techniquement possibles :
- le dispositif comprend en outre une unité de piquage disposée sur une ligne de traitement d'eaux usées et apte à piquer le flux d'effluents pour l'acheminer et le stocker dans une bâche de stockage d'effluents à un niveau choisi ;
- le dispositif comprend en outre un circuit primaire en boucle fermée comprenant une pompe de prélèvement possédant une entrée reliée à la bâche de stockage et un réservoir à vessie possédant une entrée reliée à la sortie de la pompe et une sortie reliée à une troisième entrée du circuit principal pour amorcer ledit circuit principal ;
- la canalisation principale comprend un revêtement de protection interne à base de résine époxy permettant d'éviter la corrosion ;
- le dispositif comprend une pluralité de boucles de rétroaction montées en cascade selon l'écoulement des fluides dans la canalisation principale ; le nombre de boucles étant déterminé en fonction de la dimension des canalisations et par la quantité de production d'électricité visée;
- le dispositif comprend en outre au moins un système de stockage d'énergie de secours permettant le stockage d'une partie de l'énergie électrique générée par le dispositif de production d'énergie afin de la restituer au système de traitement des effluents en cas de pic de consommation transitoire ;
- le dispositif comprend au moins un système de soupapes de sécurité permettant une régulation limitative de la pression des fluides en circulation ;
- le dispositif comprend en outre un système de purge d'air automatique ;
- le dispositif comprend des systèmes antivibratoires à la jonction entre la canalisation principale et le groupe turbine/alternateur ainsi qu'au niveau des surpresseurs et pompes du dispositif.

L'invention concerne également selon un autre aspect, un procédé de production d'énergie hydroélectrique à partir d'un flux d'effluents, mis en œuvre par le dispositif conforme à l'invention et comprenant un circuit principal en boucle ouverte comprenant une canalisation principale dans laquelle circule un fluide destiné en sortie à être éjecté sur un groupe turbine/alternateur générateur d'électricité, une première entrée de la canalisation principale recevant le flux d'effluents pour siphonner un fluide destiné à circuler dans le circuit principal; et au moins une boucle de rétroaction comprenant un gicleur à diamètre variable dont l'entrée est reliée à une seconde entrée de la canalisation principale, un éjecteur et un col de venturi configuré pour aspirer les effluents en sortie de l'éjecteur, la boucle de rétroaction comprenant en outre un piquage en sortie du col de venturi pour alimenter un surpresseur à fréquence variable afin d'établir une pression dynamique des fluides circulants, ledit surpresseur étant suivi d'un réservoir dont la sortie est reliée à l'entrée du gicleur afin de maintenir une pression statique choisie des fluides circulant en mode de fonctionnement permanent à l'intérieur de la canalisation principale; ledit procédé étant caractérisé en ce qu'il comprend les étapes suivantes :
- établir une circulation des fluides en mode de fonctionnement permanent dans la canalisation principale,
- faire varier la fréquence de l'alimentation du surpresseur de manière à augmenter/baisser le débit et la pression dynamique des fluides en circulation établie en mode de fonctionnement permanent dans la canalisation principale
- piloter la marche/ arrêt du dispositif, et
- contrôler le fonctionnement du groupe turbine/alternateur afin de produire une quantité contrôlée d'électricité.

D'autres avantages et caractéristiques de l'invention apparaitront à l'examen de la description et des dessins dans lesquels :
la **figure 1** représente schématiquement les systèmes fonctionnels d'un mode de réalisation du dispositif appelé « régénérateur » selon l'invention ;
la **figure 2** représente schématiquement le circuit primaire du dispositif conforme à l'invention ;
la **figure 3** représente schématiquement la combinaison et le fonctionnement du circuit principal, du système de surpression, et du système de turbine/alternateur conforme à l'invention ;
la **figure 4** représente schématiquement l'organisation du module de pilotage conforme à l'invention ; et
la **figure 5** représente schématiquement les différentes étapes du procédé conforme à l'invention.

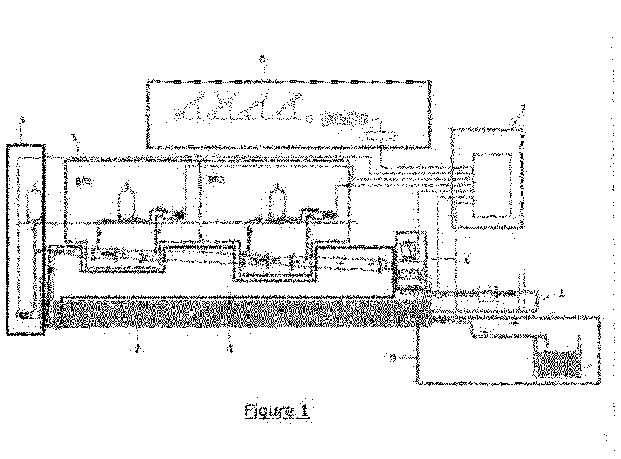

En référence à la **figure 1**, le dispositif de production d'énergie hydroélectrique comprend plusieurs modules dont l'ensemble forme un « régénérateur ». Dans l'ordre d'écoulement des fluides, le régénérateur comporte un module de piquage 1 à partir d'une zone de traitement des effluents telle qu'une station d'épuration (non représentée). Les effluents sont partiellement ou totalement traités avant l'étape de piquage, laquelle peut posséder une pompe (non représentée) afin que le piquage puisse être effectué même si le débit des conduits de la zone de traitement est trop faible.

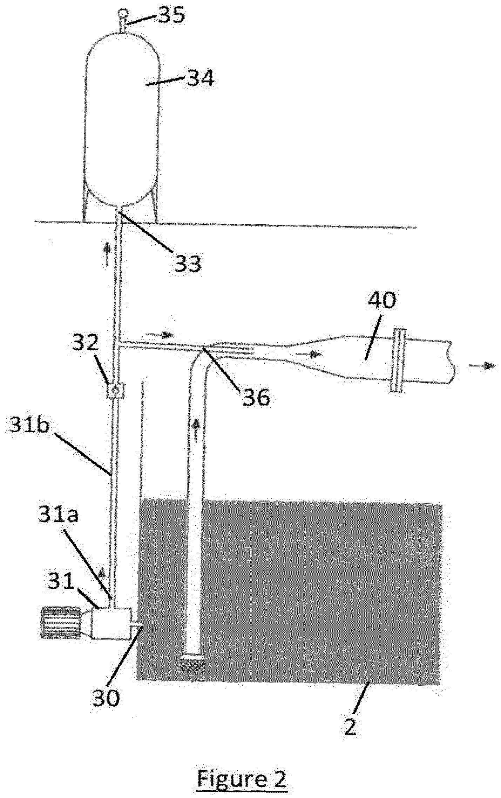

Selon un mode de réalisation, le dispositif possède une bâche de stockage 2, laquelle permet le stockage des effluents provenant de l'étape de piquage précédente, afin qu'ils soient utilisés par le dispositif. Une fois les effluents stockés dans la bâche de stockage 2, un système primaire 3 décrit en détail en référence à la **figure 2** va pomper une partie de ces effluents afin de créer un flux à bas débit et basse pression vers un circuit principal 4, lequel grâce à l'établissement du flux active un mécanisme de siphon du circuit principal 4 à partir de la bâche de stockage 2. Ce flux traverse tout le circuit principal 4, lequel est incliné vers le bas de manière à garantir un écoulement gravitationnel, les fluides circulants étant relargués dans la bâche de stockage 2 après passage dans un groupe turbine/alternateur 6.

Selon un autre mode de réalisation, le flux d'effluents est directement piqué au niveau d'une ligne de traitement d'eaux usées (non représentée).

Le régénérateur comprend en outre une ou plusieurs boucles de rétroaction BR, individualisées en BR1, BR2 et positionnées en cascade (ou série), lesquelles permettent la création et la modulation de pression et débit dans le circuit principal 4 afin de maximiser la rotation de la turbine 6. Les performances d'une boucle, c'est-à-dire que la variation de débit et de pression, dépendent de la dimension des canalisations et les possibilités de variation de vitesse du surpresseur. Le fonctionnement d'une boucle est limité par une vitesse maximum liée aux dimensions. Par ailleurs, il est à noter que de grandes vitesses entrainent de grandes pertes de charges. Donc une boucle BR a une plage de fonctionnement, entre un minimum (un taux d'augmentation positif de la vitesse et de la pression statique) et un maximum, lié aux trop grandes pertes de charges. Pour aller au-delà de ces limites, le dispositif comprend un palier avec des conduites de dimensions différentes et un surpresseur choisi en fonction des débits et pressions visées. Pour arriver à obtenir une quantité d'énergie visée, le montage en cascade des boucles BR s'effectue ainsi en palier, chaque palier étant constitué de conduites aux dimensions différentes et le surpresseur étant adapté à chaque fois à son palier respectif.

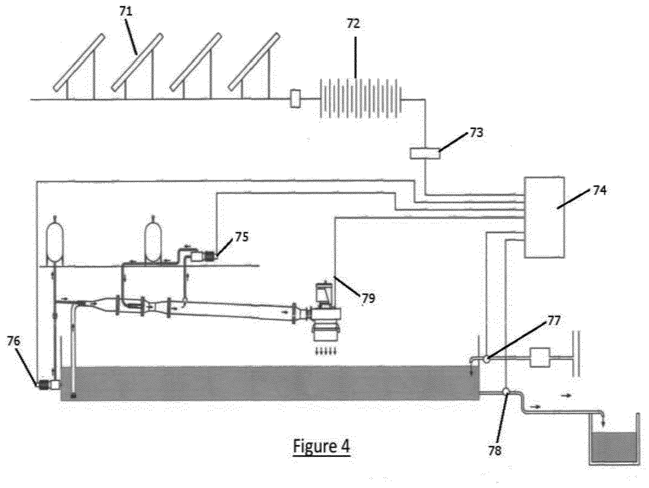

Le régénérateur comprend en outre, dans le mode de réalisation de la **figure 1**, un système d'alimentation pour sa mise en marche 8, ici grâce à des panneaux solaires et un ou plusieurs accumulateurs associés, ainsi qu'un système de pilotage 7 que l'on décrira plus en détail ci-après en référence à la **figure 4** et permettant le démarrage/extinction du dispositif ainsi que la modulation des différents systèmes présents dans le dispositif dont les pompes, le/les surpresseurs, la turbine ainsi que le système d'alimentation et de production/distribution de l'énergie générée par le système.

Enfin, le régénérateur comprend un système de relargage des effluents 9 dans la zone de traitement à partir de la bâche de stockage 2. Les éléments et sous-ensembles du régénérateur sont avantageusement dimensionnés de manière à présenter un encombrement minimum afin que le régénérateur soit amovible, en vue de faciliter son transport, limiter les contraintes et faciliter sa mise en place dans des zones reculées. Dans un mode de réalisation, les différents modules constituant le dispositif régénérateur sont susceptibles d'être contenus dans un conteneur de taille normalisée. Ainsi, la livraison du dispositif régénérateur est rendue facile depuis son lieu de fabrication jusqu'à son installation. Le dispositif régénérateur est donc facilement mobile et facilement amovible, c'est-à-dire facilement associable à une ligne de traitement d'effluents. En outre, le dispositif régénérateur peut être installé dans un local technique de petite taille en relation avec la station d'épuration auquel le dispositif régénérateur est associé.

En référence à la **figure 2****,** le circuit primaire 3 comporte une entrée 30 à partir de laquelle les effluents stockés dans la bâche de stockage 2 sont pompés grâce à un système de pompage 31 équipé de manchons antivibratoires afin de limiter l'endommagement du système causé par les vibrations liées au fonctionnement du système, la pompe 31 propulsant ces mêmes effluents dans le conduit 31b via la sortie 31a. Le conduit 31b comporte un clapet anti-retour 32 permettant d'empêcher que les fluides pompés redescendent vers la pompe 31. Les fluides sont ensuite envoyés dans un réservoir à vessie 43, lequel permet l'établissement d'une pression statique, laquelle est mesurée via un manomètre 35, et sont renvoyés via un système de sortie du réservoir 33, vers une sortie 36 laquelle injecte les effluents sous pression dans la conduite principale 40, permettant donc la mise en circulation des effluents dans le dispositif régénérateur décrit en référence à la **figure 1**, ce qui constitue l'étape d'amorçage du dispositif régénérateur.

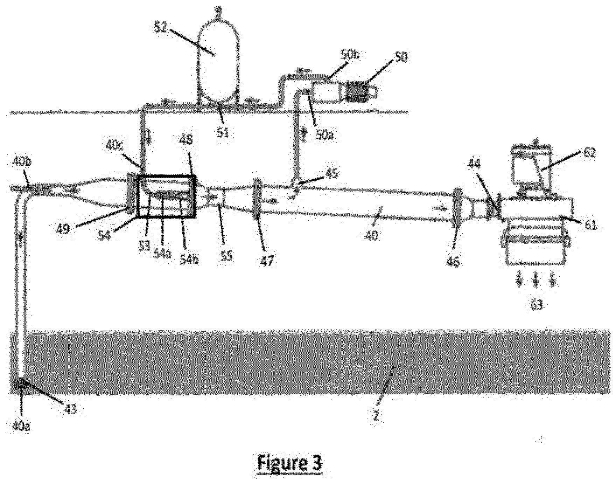

En référence à la **figure 3****,** on a représenté schématiquement la combinaison et le fonctionnement des modules du régénérateur de la **figure 1**. Après l'étape d'amorçage grâce au circuit primaire 3 décrite en référence à la **figure 2**, un flux est établi. Ce flux permet la création d'un effet de siphonage d'une partie des effluents dans la bâche de stockage 2, s'établissant à partir d'une première entrée du circuit principal 40a, immergée dans la bâche de stockage 2 et possédant un système de crépine et valve anti-retour 43. Ce flux établi est additionné au flux d'effluents injecté par le circuit primaire 3 dans la conduite principale 40 via une troisième entrée 40b. La conduite principale 40 est de forme oblongue et inclinée vers le bas afin de permettre l'écoulement gravitationnel via une troisième entrée 40b. Ainsi, la conduite principale inclinée permet la mise en place d'un flux constant dans le circuit principal 4, passant ensuite par le système de turbine 61 via des injecteurs 44. Enfin les fluides en sortie 63 du groupe turbine 61 alternateur 62 sont relargués dans la bâche de stockage 2.

Par exemple, la turbine 61 est de type Pelton, laquelle permet de manière connue la conversion des énergies cinétique (vitesses des effluents) et énergies potentielle (pressions statiques) des fluides circulants en énergie mécanique. Lorsque le dispositif régénérateur passe en mode de fonctionnement permanent afin de générer une quantité d'énergie déterminée, il est activé un (dans cet exemple de mode de réalisation) ou plusieurs systèmes de surpression 5, lequel effectue un piquage des effluents circulants de la conduite principale 40 via l'entrée du système de surpression 45 situé en aval d'un col de Venturi 55, amenant les fluides jusqu'à l'entrée 50a d'un surpresseur 50, lequel ajoute une pression dynamique modulable au fluides circulants possédant déjà une pression statique.

Chaque surpresseur 50 est équipé de manchons antivibratoires tout comme la pompe du circuit primaire, afin de limité l'endommagement du système à cause des vibrations liées au fonctionnement de celui-ci. Ces fluides sont ensuite éjectés du surpresseur 50, via une conduite de sortie 50b, laquelle achemine les fluides jusqu'à un réservoir à vessie 52, permettant de maintenir une pression statique dans le système de surpression BR1 (**Fig. 1**). Les fluides circulants du système de surpression sont ensuite réintroduits dans le circuit principal 40, via une entrée de celui-ci 40c, laquelle amène les fluides à haute pression et haut débit dans un système appelé « Reniflard » 54, lequel se compose d'une conduite d'alimentation 53, d'un gicleur 54a, et d'un éjecteur 54b, permettant l'éjection des fluides de manière directionnelle vers le tube de Venturi 55 d'angle d'entrée convergent (par exemple de 21 °) et d'un angle de sortie divergent (par exemple de 8°), faisant partie intégrante de la conduite principale 40, et permettant la conservation du débit et l'aspiration des effluents de manière à minimiser la perte de pression acquise grâce au système de surpression 50. Selon d'autres modes de réalisation, les angles du tube de venturi 55 peuvent être de valeurs différentes.

Les étapes de piquage, surpression et réinjection constituent un système appelé boucle de rétroaction BR. La rétroaction est l'action en retour d'un effet sur sa propre cause. Ainsi le cycle de causes et d'effets forme une boucle dite : « boucle de rétroaction » permettant une variation de pression des fluides circulants à faible coût énergétique. Lorsque le dispositif régénérateur complet est rempli de fluides permettant un écoulement, la première boucle de rétroaction BR1 est lancée afin de faire monter la pression dans le circuit principal 4. Ensuite, on ouvre progressivement le débit du jet en sortie vers la turbine 61. En régime établi, le fluide est simultanément propulsé par le reniflard 54 et aspiré par le système venturi 55. A chaque cycle de la boucle de rétroaction BR, le fluide subit un saut de pression. Une partie de ces fluides sous pression éjectés dans le col de Venturi 55 vont être piqués 45 à nouveau pour reproduire une boucle de rétroaction via le système de surpression 5, et les fluides circulants à haut débit et haute pression restants vont être amenés par le conduit principal 40 jusqu'à la sortie 44 comportant des injecteurs, lesquels injectent les fluides de haut débit et haute pression vers la turbine 61 afin de générer de l'électricité via un alternateur 62.

Avantageusement, le groupe turbine 61/alternateur 62 est relié à la conduite principale 40 par des silentblocs (non représentés ici) et n'est pas solidaires des autres structures. Les fluides sont ensuite relargués dans la bâche de stockage 2, via une sortie 63 située sous la turbine 61 dans ce mode de réalisation. En alternative, le groupe turbine 61/ alternateur 62 est immergé.

Selon un mode de réalisation dans lequel le système est choisi de petite taille et transportable, une turbine de type Pelton, non immergée, est relativement bien adaptée pour produire 3 à 200 kW.

En variante, la ou les turbines sont immergées dans les circuits d'effluents. Pour de grands débits et pour de grands diamètres de conduites par exemple au-delà de 600 mm, les turbines à réaction de type Francis ou analogues sont relativement bien adaptées, notamment pour des installations fixes et de grandes dimensions.

De préférence, les canalisations des modules du dispositif conforme à l'invention comprennent un revêtement de protection interne à base de résine époxy permettant d'éviter la corrosion dû à la composition des effluents.

En référence à la **figure 4****,** on a représenté schématiquement l'organisation du module de pilotage 7, décrit en référence à la **figure 1****.** Le module de pilotage 7 comprend une unité centrale de pilotage 74, permettant la gestion de tout le dispositif de production d'énergie hydroélectrique. Il est relié dans un premier temps à une source énergétique de démarrage du dispositif, ici composée de cellules photovoltaïques 71, un ou plusieurs accumulateurs 72 permettant le stockage de l'énergie produite par les cellules photovoltaïques et une unité de contrôle de l'énergie injectée 73 dans le dispositif provenant des cellules photovoltaïques 71 et accumulateurs 72 et permettant d'apporter l'énergie nécessaire au système pour démarrer. L'unité centrale de pilotage 74 est ensuite reliée à une électrovanne d'arrivée 77 situé au niveau des canalisations du système de piquage 1 (**Fig. 1**) décrit précédemment ainsi qu'une électrovanne d'évacuation 78 située au niveau du système d'évacuation décrit en **figure 1**, ces deux composants permettant le contrôle de la quantité et du débit d'effluents introduits et évacués du dispositif. Ensuite, l'unité centrale de pilotage 74 est reliée à la commande d'alimentation de la pompe 76, permettant le démarrage et d'amorçage du dispositif de production d'énergie hydroélectrique.

En outre, l'unité centrale 74 est reliée à un ou plusieurs variateurs de fréquence du surpresseur 50 permettant de moduler le débit ainsi que la pression des fluides circulants dans le système de surpression 50, 52, 54, 55 et étant réinjectés jusqu'au système de turbine 61, permettant ainsi la modulation de la production d'énergie. De même, l'unité centrale 74 est reliée à un système de pilotage de la production d'énergie 79, situé au niveau du groupe turbine/alternateur 61/62 et permettant l'enregistrement, et le relevé des données de production afin d'ajuster le fonctionnement de chaque module/unité du dispositif régénérateur pour moduler la production d'énergie selon les besoins de la station de traitement des effluents à laquelle le dispositif est adapté.

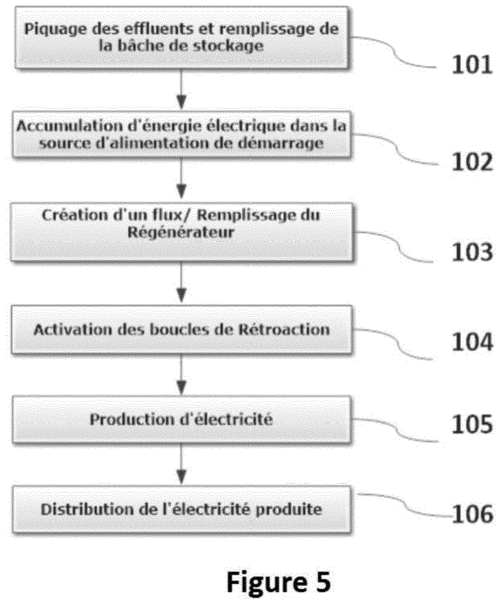

En référence à la **figure 5****,** on a représenté schématiquement les étapes du procédé selon l'invention. La première étape 101 du procédé mis en œuvre selon l'invention est le piquage des effluents permettant le remplissage de la bâche de stockage 2 (Fig. 1), ce qui permet au dispositif de disposer de fluides à faire circuler dans le dispositif régénérateur.

Ensuite, le système photovoltaïque 71 combiné à un ou plusieurs accumulateurs 72 (Fig. 4) permettent la production et le stockage d'énergie électrique 102 afin de fournir l'énergie suffisante à la pompe 31 (Fig.2) du circuit primaire 3 (Fig. 1) pour sa mise en fonction. Lorsque l'énergie accumulée est suffisante, le dispositif régénérateur peut démarrer et activer la pompe 31 (Fig.2) du circuit primaire 3 (Fig. 1). Selon un mode de réalisation de l'invention, on place plusieurs accumulateurs afin de garantir le démarrage à tout moment du jour et de l'année et permet de garantir l'autonomie énergétique de démarrage du dispositif conforme à l'invention, puisque l'intensité de l'énergie solaire peut être sujette à de nombreuses variations selon les conditions climatiques, les moments de la journée et les saisons. D'autre part, les risques de fortes sollicitations énergétiques du dispositif régénérateur vis-à-vis du système de traitement auquel il est adapté se prolongeant sur de longues périodes pouvant aller jusqu'à plusieurs jours peuvent mettre en difficulté l'autonomie de la station. Ce dispositif complémentaire devient donc souhaitable, notamment pour les stations d'épurations isolées.

L'activation de la pompe 31 (Fig.2) du circuit primaire 3 (Fig. 1) permet au dispositif d'entrer dans un mode de fonctionnement dit d'amorçage 103, où l'activation du circuit primaire 3 (Fig. 1) permet l'établissement d'un flux en provenance de la bâche de stockage 2 (Fig. 1), passant dans le circuit principal 4 (Fig.1) incliné vers le bas ce qui permet la mise en place d'un écoulement gravitaire, les fluides étant relargués dans la bâche de stockage 2 (Fig. 1) après un passage dans le système turbine/alternateur 6 (Fig.1). Un flux stable est donc établi dans le dispositif régénérateur une fois que le remplissage complet de celui-ci est atteint. Lors du remplissage du dispositif, un système de purge automatique (non représenté) permet l'évacuation de l'air présent dans le dispositif, afin de ne pas endommager les systèmes internes lors de sa mise en fonctionnement.

Une fois les étapes de remplissage et d'établissement du flux complétées, l'unité de pilotage du dispositif 7 (Fig. 1) active au moins un système de surpression 5 (Fig.1) conforme à l'invention permettant la création d'une première boucle de rétroaction 104. Les premières boucles de rétroaction dite positive permettent d'augmenter la pression ainsi que le débit des fluides circulants, et amplifie le phénomène de montée en pression, le système de surpression 5 (Fig. 1) s'alimentant donc lui-même. En régime établi les fluides sont simultanément propulsés par le reniflard 54 (Fig. 3) et aspiré par le système venturi 55 (Fig. 3). A chaque cycle de la boucle le fluide subit donc un saut de pression. La répétition de la réaction (réaction itérative) entraîne une amplification continuelle du débit et de la pression des fluides circulants dans la conduite principale 40 (Fig. 2).

Le Demandeur a fait les observations suivantes. Par exemple dans le cas d'une boucle qui présente une baisse de pression, entre deux prises de mesures, si la durée de prise en compte d'envoi du signal de réaction est trop longue, alors la baisse de pression va se poursuivre et le système risque de se désamorcer. De même, une trop grande inertie du système et le manque de réactivité rapide, lors des phases de baisse de régime, risquent aussi de désamorcer le système. Il est à noter que dans le cas contraire les trop fortes montées en charges sont limitées par les soupapes de sécurités. En revanche le manque de réactivité rapide lors des trop fortes baisses de régime peut entraîner le désamorçage et des arrêts intempestifs. En outre, on veille à limiter l'amplification aux limites physiques du système afin d'éviter les dommages pouvant être provoqués par un emballement du système.

Une fois la pression et le débit cible atteint, l'étape d'amorçage du système est alors complétée, l'unité de pilotage du dispositif 7 (Fig. 1) commande alors la mise en place d'un mode de fonctionnement dit « permanent », lequel inclus des boucles de rétroactions à effets variables, et contrôlées par le ou les variateurs de fréquence du surpresseur 75 (Fig. 4), et permet d'ajuster la pression et le débit des fluides circulants dans la conduite principale 40 aux besoins de production d'énergie du système de traitement auquel le dispositif est adapté. La boucle de rétroaction peut donc avoir un effet variable (parfois positive, parfois négative) selon les conditions et notamment selon le délai de transmission et l'inertie du système.

Un troisième type de boucle de rétroaction (non représenté), est utilisée lors de l'arrêt du dispositif. Lorsque la répétition de la réaction (réaction itérative) entraîne sa propre diminution et son extinction progressive, on parle dans ce cas de rétroaction négative. La rétroaction négative provoque un amortissement permettant de réguler mais aussi d'arrêter progressivement le dispositif régénérateur.

Le dispositif régénérateur fonctionne donc dans un mode dit « permanent », lequel inclut une circulation des fluides à haute pression et haut débit éjectés via un dispositif de jet réglable 44 (Fig. 3) vers une turbine hydraulique 61 (Fig. 3) intégrée au circuit. L'éjection des fluides vers la turbine 61 (Fig. 3) permet alors la production d'électricité 105. Les énergies cinétiques (vitesses des fluides) et les énergies potentielles (pressions statiques) sont converties en énergie mécanique utilisée par les hauteurs de chute équivalentes à des mètres de colonne d'eau. La quantité d'électricité produite dépend donc de la puissance hydraulique générée et récupérée par le dispositif régénérateur conforme à l'invention. Lors d'un fonctionnement en mode « permanent », un système de purge automatique évacue les poches d'air des systèmes, lesquelles se forment lors du fonctionnement normal du dispositif, afin de minimiser les dommages internes pouvant être causés (corrosion).

A titre d'exemple et non limitatif, la différence de pression entre l'entrée 44 (Fig. 3) et la sortie 63 (Fig. 3) de la turbine 61 est d'environ 4 bars (soit 40 mètres de colonne d'eau). Le débit des effluents à turbiner étant en moyenne de 0.070 m3, la production d'électricité est estimée à P = 15 kW.

La production d'électricité 105 se fait selon deux modes :
- un mode autonome, ajustant l'électricité produite par le régénérateur aux besoins seuls du dispositif et du système de traitement des effluents auquel il est adapté et
- un mode de marche forcée, lequel permet au système de produire plus d'électricité que les besoins du système de traitement, laquelle pourra être stockée dans des accumulateurs (non représentés) ou envoyée directement vers un système tiers.

Appliqués aux besoins énergétiques d'une station d'épuration autonome énergétiquement pour 400 habitants, les éléments chiffrés des modules sont respectivement une station solaire 71 (Fig. 4) de 5 kWh ; des batteries opérationnelles 72 (Fig. 4) de 10 kWh, une pompe d'alimentation 31 (Fig. 2) de 1 kW et un surpresseur et boucle de rétroaction 5 (Fig.1) de 3 kW. Avec un besoin énergétique au démarrage de 15 kWh, et en prenant une pression de service de 4 bars, soit un équivalent de 40 mètres de colonne d'eau et un diamètre d'éjection de la turbine 61 de 30mm pour un débit moyen d'environ 70 litres par seconde, on obtient une production électrique nette de 15 kW permettant l'alimentation d'une station d'épuration pour 400 habitants.

La dernière étape du procédé décrit en référence à la **figure 5** concerne la distribution de l'électricité produite. Une partie est autoconsommée pour assurer le fonctionnement normal et optimal du régénérateur, le reste de l'électricité produite est répartie entre la station d'épuration pour assurer son fonctionnement normal et s'adapter à ses besoins énergétiques pouvant varier à certains horaires de pic d'activité. S'il un excédent d'énergie est produit, alors celle-ci est stockée dans des accumulateurs (non représentés).

## Revendications

1. Dispositif de production d'énergie hydroélectrique à partir d'un flux d'effluents, comprenant :
- un circuit principal (4) en boucle ouverte comprenant une canalisation principale (40) dans laquelle circule des fluides destinés en sortie à être éjectés sur un groupe turbine/alternateur générateur d'électricité (61,62), une première entrée (40a) de la canalisation principale recevant le flux d'effluents pour siphonner des fluides destinés à circuler dans le circuit principal (4);
**caractérisé par**
- au moins une boucle de rétroaction (BR) comprenant un gicleur (54a) à diamètre variable dont l'entrée est reliée à une seconde entrée de la canalisation principale (40c), un éjecteur (54b) et un col de venturi (55) configuré pour aspirer les effluents en sortie de l'éjecteur (54b), la boucle de rétroaction (BR) comprenant en outre un piquage (45) en sortie du col de venturi (55) pour alimenter un surpresseur à fréquence variable (50) afin d'établir une pression dynamique des fluides circulants, ledit surpresseur (50) étant suivi d'un réservoir (52) dont la sortie (51) est reliée à l'entrée du gicleur (53) afin de maintenir une pression statique choisie des fluides circulants en mode de fonctionnement permanent à l'intérieur de la canalisation principale (40); et
- une unité de pilotage (7) configurée pour établir une circulation des fluides en mode de fonctionnement permanent dans la canalisation principale (40), faire varier la fréquence (75) de l'alimentation du surpresseur de manière à augmenter/baisser le débit et la pression dynamique des fluides en circulation, piloter la marche/ arrêt du dispositif (74) et contrôler le fonctionnement du groupe turbine/alternateur (61,62) afin de produire une quantité contrôlée d'électricité (79).

2. Dispositif selon la revendication 1, **caractérisé en ce qu'**il comprend en outre une unité de piquage (1) disposée sur une ligne de traitement d'eaux usées et apte à piquer le flux d'effluents pour l'acheminer et le stocker dans une bâche de stockage d'effluents (2) à un niveau choisi.

3. Dispositif selon la revendication 2, **caractérisé en ce qu'**il comprend en outre un circuit primaire (3) en boucle fermée comprenant une pompe de prélèvement (31) dont l'entrée (30) est reliée à la bâche de stockage (2) et un réservoir à vessie (34) possédant une entrée (33) reliée à la sortie de la pompe (31a) et une sortie (33) reliée à une troisième entrée (36) du circuit principal (4) pour amorcer ledit circuit principal.

4. Dispositif selon l'une quelconque des précédentes revendications, **caractérisé en ce que** la canalisation principale (40) comprend un revêtement de protection interne à base de résine époxy permettant d'éviter la corrosion.

5. Dispositif selon l'une quelconque des précédentes revendications, la revendication 1, **caractérisé en ce qu'**il comprend une pluralité de boucles de rétroaction (BR) montées en cascade selon l'écoulement des fluides dans la canalisation principale (40).

6. Dispositif selon la revendication 1 **caractérisé en ce qu'**il comprend en outre au moins un système de stockage d'énergie de secours permettant le stockage d'une partie de l'énergie électrique générée par le dispositif de production d'énergie afin de la restituer à la ligne de traitement des effluents en cas de pic de consommation.

7. Dispositif selon la revendication 1 **caractérisé en ce qu'**il comprend au moins un système de soupapes de sécurité permettant une régulation limitative de la pression des fluides en circulation dans la canalisation principale (40).

8. Dispositif selon la revendication 1, **caractérisé en ce qu'**il comprend en outre un système de purge d'air automatique.

9. Dispositif selon l'une quelconque des précédentes revendications, **caractérisé en ce qu'**il comprend des systèmes antivibratoires à la jonction entre la canalisation principale (40) et le groupe turbine/alternateur (61,62) ainsi qu'au niveau des surpresseurs (50) et des pompes.

10. Procédé de production d'énergie hydroélectrique à partir d'un flux d'effluents, mis en œuvre par le dispositif selon l'une des revendications 1 à 9 du type comprenant un circuit principal (4) en boucle ouverte comprenant une canalisation principale (40) dans laquelle circule des fluides destinés en sortie à être éjectés sur un groupe turbine/alternateur générateur d'électricité (61,62), une première entrée (40a) de la canalisation principale recevant le flux d'effluents pour siphonner les fluides destinés à circuler dans le circuit principal (4); et au moins une boucle de rétroaction (BR) comprenant un gicleur (54a) à diamètre variable dont l'entrée (53) est reliée à une seconde entrée de la canalisation principale (40c), un éjecteur (54b) et un col de venturi (55) configuré pour aspirer les effluents en sortie de l'éjecteur (54b), la boucle de rétroaction (BR) comprenant en outre un piquage (45) en sortie du col de venturi (55) pour alimenter un surpresseur (50) à fréquence variable afin d'établir une pression dynamique des fluides circulants, ledit surpresseur (50) étant suivi d'un réservoir (52) dont la sortie (51) est reliée à l'entrée du gicleur (53) afin de maintenir une pression statique choisie des fluides circulants en mode de fonctionnement permanent à l'intérieur de la canalisation principale (40) ; ledit procédé étant **caractérisé en ce qu'**il comprend les étapes suivantes :
- établir une circulation des fluides en mode de fonctionnement permanent dans la canalisation principale (40),
- faire varier la fréquence (75) de l'alimentation du surpresseur (50) de manière à augmenter/baisser le débit et la pression dynamique des fluides en circulation établie en mode de fonctionnement permanent dans la canalisation principale (40)
- piloter la marche/ arrêt du dispositif (74), et
- contrôler le fonctionnement du groupe turbine/alternateur (61,62) afin de produire une quantité contrôlée d'électricité (79).

## Patentansprüche

1. Vorrichtung zur Erzeugung von Wasserkraft aus einem Abwasserstrom, die folgendes umfasst:
- einen offenen Hauptkreislauf (4) mit einer Hauptleitung (40), in der Flüssigkeiten strömen, die dazu bestimmt sind, am Austritt auf eine stromerzeugende Turbinen-Generator-Gruppe (61, 62) geleitet zu werden, wobei ein erster Einlass (40a) der Hauptleitung den Abwasserstrom aufnimmt, um die im Hauptkreislauf (4) fließenden Flüssigkeiten abzusaugen;
**gekennzeichnet durch**
- mindestens eine Rückkopplungsschleife (BR), die eine Düse (54a) mit veränderlichem Durchmesser umfasst, deren Einlass mit einem zweiten Einlass der Hauptleitung (40c) verbunden ist, eine Strahldüse (54b) und einen Venturihals (55), der so gestaltet ist, dass das Abwasser am Ausritt der Strahldüse (54b) abgesaugt wird, wobei die Rückkopplungsschleife (BR) des Weiteren einen Abzweig (45) am Ausgang des Venturihalses (55) umfasst, um eine Druckerhöhungsanlage (50) mit variabler Frequenz zu versorgen und einen dynamischen Druck der hindurchströmenden Flüssigkeiten aufzubauen, wobei auf die Druckerhöhungsanlage (50) ein Behälter (52) folgt, dessen Auslass (51) mit dem Einlass der Düse (53) verbunden ist, um einen ausgewählten statischen Druck der im Dauerbetrieb in der Hauptleitung (40) fließenden Flüssigkeiten aufrechtzuerhalten; und
- eine Steuereinheit (7), die so gestaltet ist, dass die Flüssigkeiten die Hauptleitung (40) im Dauerbetrieb durchströmen, die Frequenz (75) der Versorgung der Druckerhöhungsanlage verändert wird, so dass der Durchsatz und der dynamische Druck der strömenden Flüssigkeiten erhöht/verringert wird, das Ein-/Ausschalten der Vorrichtung (74) gesteuert, und der Betrieb der Turbinen- und Generator-Gruppe (61, 62) kontrolliert wird, um eine kontrollierte Menge an Elektrizität (79) zu erzeugen.

2. Vorrichtung nach Anspruch 1, **dadurch gekennzeichnet, dass** sie des Weiteren eine Abzweigeinheit (1) umfasst, die auf einer Abwasserbehandlungslinie angeordnet und in der Lage ist, den Abwasserstrom abzuzweigen und ihn in einem Abwassertank (2) bis zu einer ausgewählten Füllhöhe zu speichern.

3. Vorrichtung nach Anspruch 2, **dadurch gekennzeichnet, dass** sie des Weiteren einen geschlossenen Primärkreislauf (3) mit einer Probenahmepumpe (31) umfasst, deren Einlass (30) mit dem Tank (2) verbunden ist, einen Ausdehnungsbehälter (34) mit einem Einlass (33), der mit dem Auslass der Pumpe (31a) verbunden ist, und einen Auslass (33), der mit einem dritten Einlass (36) des Hauptkreises (4) verbunden ist, um den Hauptkreislauf zu starten.

4. Vorrichtung nach einem der vorhergehenden Ansprüche, **dadurch gekennzeichnet, dass** die Hauptleitung (40) eine innere Schutzschicht auf Epoxidharzbasis zum Schutz vor Korrosion umfasst.

5. Vorrichtung nach einem der vorhergehenden Ansprüche, Anspruch 1, **dadurch gekennzeichnet, dass** sie eine Vielzahl von Rückkopplungsschleifen (BR) umfasst, die entsprechend dem Fließverhalten der Flüssigkeiten in der Hauptleitung (40) kaskadiert sind.

6. Vorrichtung nach Anspruch 1, **dadurch gekennzeichnet, dass** sie des Weiteren mindestens ein Notstromspeichersystem umfasst, das die Speicherung eines Teils der von der Energieerzeugungsvorrichtung erzeugten, elektrischen Energie ermöglicht, um sie im Falle einer Spitzenlast in der Abwasserbehandlungslinie wieder zu nutzen.

7. Vorrichtung nach Anspruch 1, **dadurch gekennzeichnet, dass** sie mindestens ein Sicherheitsventilsystem umfasst, das eine begrenzende Regelung des Drucks der in der Hauptleitung (40) strömenden Flüssigkeiten ermöglicht.

8. Vorrichtung nach Anspruch 1, **dadurch gekennzeichnet, dass** sie des Weiteren ein automatisches Entlüftungssystem umfasst.

9. Vorrichtung nach einem der vorhergehenden Ansprüche, **dadurch gekennzeichnet, dass** sie an der Verbindung zwischen der Hauptleitung (40) und der Turbinen-Generator-Gruppe (61, 62) sowie an den Druckerhöhungsanlagen (50) und Pumpen Antivibrationssysteme umfasst.

10. Verfahren zur Erzeugung von Wasserkraft aus einem Abwasserstrom, das durch die Vorrichtung nach einem der Ansprüche 1 bis 9 des Typs mit offenem Hauptkreislauf (4) umgesetzt wird, mit einer Hauptleitung (40), durch die Flüssigkeiten strömen, die dazu bestimmt sind, am Auslass auf eine stromerzeugende Turbinen-Generator-Gruppe (61, 62) geleitet zu werden, wobei ein erster Einlass (40a) der Hauptleitung den Abwasserstrom aufnimmt, um die Flüssigkeiten, die dazu bestimmt sind, im Hauptkreislauf (4) zu fließen, abzusaugen; und mindestens eine Rückkopplungsschleife (BR), die eine Düse (54a) mit veränderlichem Durchmesser umfasst, deren Einlass (53) mit einem zweiten Einlass der Hauptleitung (40c) verbunden ist, eine Strahldüse (54b) und einen Venturihals (55), der so gestaltet ist, dass das Abwasser am Ausgang der Strahldüse (54b) abgesaugt wird, wobei die Rückkopplungsschleife (BR) ferner einen Abzweig (45) am Ausgang des Venturihalses (55) umfasst, um eine Druckerhöhungsanlage (50) mit veränderlicher Frequenz zum Herstellen eines dynamischen Drucks der strömenden Flüssigkeiten zu versorgen, wobei auf die Druckerhöhungsanlage (50) ein Behälter (52) folgt, dessen Auslass (51) mit dem Einlass der Düse (53) verbunden ist, um einen ausgewählten statischen Druck der im Dauerbetrieb in der Hauptleitung (40) strömenden Flüssigkeiten aufrechtzuerhalten; wobei das Verfahren **dadurch gekennzeichnet ist, dass** es die folgenden Schritte umfasst:
- das Durchströmen der Hauptleitung (40) mit Flüssigkeiten im Dauerbetrieb,
- die Veränderung der Frequenz (75) der Versorgung der Druckerhöhungsanlage (50), so dass der Durchfluss und der dynamische Druck der durch die Hauptleitung (40) strömenden Flüssigkeiten erhöht/verringert werden kann,
- das Steuern des Ein-/Ausschaltens der Vorrichtung (74) und
- das Kontrollieren des Betriebs der Turbinen- und Generator-Gruppe (61, 62), um eine kontrollierte Menge an Strom (79) zu erzeugen.

## Claims

1. A device for producing hydroelectric energy from an effluent stream, comprising:
an open-loop main circuit (4) comprising a main pipe (40) in which fluids intended to be ejected, at the outlet, onto an electricity generating turbine/generator unit (61, 62), are circulated, with a first inlet (40a) of the main pipe receiving the effluent stream for siphoning fluids intended to circulate in the main circuit (4);
**characterized by**
- at least one feedback loop (BR) comprising a variable diameter nozzle (54a) whose inlet is connected to a second inlet of the main pipe (40c), an ejector (54b) and a venturi throat (55) so configured as to suck the effluents at the outlet of the ejector (54b), with the feedback loop (BR) further comprising a tapping (45) at the outlet of the venturi throat (55) for supplying a variable frequency booster pump (50) in order to establish a dynamic pressure of the circulating fluids, with said booster pump (50) being followed by a tank (52) whose outlet (51) is connected to the inlet of the nozzle (53) in order to maintain a chosen static pressure of the circulating fluids in continuous operation mode inside the main pipe (40); and
- a control unit (7) so configured as to establish a circulation of the fluids in the continuous operation mode in the main pipe (40), vary the frequency (75) of the booster pump supply so as to increase/decrease the flow rate and the dynamic pressure of the circulating fluids, control the turning on/off of the device (74) and control the operation of the turbine/generator unit (61, 62) in order to produce a controlled quantity of electricity (79).

2. A device according to claim 1, **characterized in that** it further comprises a tapping unit (1) arranged on a wastewater treatment line and suitable for tapping the effluents stream for conveying and storing same to/in an effluent storage tank (2) up to a chosen level.

3. A device according to claim 2, **characterized in that** it further comprises a closed-loop primary circuit (3) comprising a sampling pump (31) whose inlet (30) is connected to the storage tank (2) and a bladder tank (34) having an inlet (33) connected to the outlet of the pump (31a) and an outlet (33) connected to a third inlet (36) of the main circuit (4) for priming said main circuit.

4. A device according to any one of the preceding claims, **characterized in that** the main pipe (40) comprises an epoxy resin-based internal protective coating making it possible to prevent corrosion.

5. A device according to any one of the preceding claims, claim 1, **characterized in that** it comprises a plurality of feedback loops (BR) cascaded in accordance with the flow of fluids in the main pipe (40).

6. A device according to claim 1, **characterized in that** it further comprises at least one standby energy storage system for storing part of the electrical energy generated by the energy production device in order to return same to the effluent treatment line in the event of a consumption peak.

7. A device according to claim 1, **characterized in that** it comprises at least one safety valve system for regulating and limiting the pressure of the fluids circulating in the main pipe (40).

8. A device according to claim 1, **characterized in that** it further comprises an automatic air bleed system.

9. A device according to any one of the preceding claims, **characterized in that** it comprises vibration-damping systems at the junction between the main pipe (40) and the turbine/generator unit (61, 62) and at the booster pumps (50) and the pumps.

10. A method for producing hydroelectric power from an effluent stream, implemented by the device according to one of claims 1 to 9, of the type comprising an open-loop main circuit (4) comprising a main pipe (40) in which fluids intended to be ejected, at the outlet, onto an electricity generating turbine/generator unit (61, 62), are circulated, with a first inlet (40a) of the main pipe receiving the effluent stream for siphoning the fluids intended to circulate in the main circuit (4); and at least one feedback loop (BR) comprising a variable diameter nozzle (54a) whose inlet (53) is connected to a second inlet of the main pipe (40c), an ejector (54b) and a venturi throat (55) so configured as to suck the effluents at the outlet of the ejector (54b), with the feedback loop (BR) further comprising a tapping (45) at the outlet of the venturi throat (55) for supplying a variable frequency booster pump (50) in order to establish a dynamic pressure of the circulating fluids, with said booster pump (50) being followed by a tank (52) whose outlet (51) is connected to the inlet of the nozzle (53) in order to maintain a chosen static pressure of the circulating fluids in continuous operation mode inside the main pipe (40); said method being **characterized in that** it comprises the following steps:
- establish a circulation of the fluids in the continuous operation mode in the main pipe (40),
- vary the frequency (75) of the booster pump (50) supply so as to increase/decrease the flow rate and the dynamic pressure of the circulating fluids, established in the continuous operation mode in the main pipe (40),
- control the turning on/off of the device (74), and
- control the operation of the turbine/generator unit (61, 62) in order to produce a controlled quantity of electricity (79).
